(19) Europäisches Patentamt / European Patent Office / Office européen des brevets

(11) **EP 1 655 797 B1**

(12) **EUROPEAN PATENT SPECIFICATION**

(45) Date of publication and mention
of the grant of the patent:
**18.10.2023 Bulletin 2023/42**

(21) Application number: **04747849.0**

(22) Date of filing: **23.07.2004**

(51) International Patent Classification (IPC):
*H01M 10/0525* (2010.01)   *H01M 10/0585* (2010.01)
*H01M 4/131* (2010.01)   *H01M 4/133* (2010.01)
*H01M 50/54* (2021.01)   *H01M 6/42* (2006.01)
*H01M 50/562* (2021.01)   *H01M 4/02* (2006.01)

(52) Cooperative Patent Classification (CPC):
**H01M 4/131; H01M 4/133; H01M 10/0525;**
**H01M 10/0585; H01M 50/54;** H01M 6/42;
H01M 50/548; H01M 50/562; H01M 2004/021;
Y02E 60/10; Y02P 70/50

(86) International application number:
**PCT/JP2004/010460**

(87) International publication number:
**WO 2005/013408 (10.02.2005 Gazette 2005/06)**

(54) **LITHIUM ION SECONDARY CELL**

LITHIUMIONEN-SEKUNDÄRZELLE

ACCUMULATEUR AU LITHIUM

(84) Designated Contracting States:
**DE FR IT**

(30) Priority: **31.07.2003 JP 2003284313**

(43) Date of publication of application:
**10.05.2006 Bulletin 2006/19**

(73) Proprietor: **NEC Corporation**
**Minato-ku**
**Tokyo 108-8001 (JP)**

(72) Inventor: **KANETA, Hiroshi**
**Sagamihara-shi**
**Kanagawa 229-1198 (JP)**

(74) Representative: **Stork Bamberger Patentanwälte**
**PartmbB**
**Meiendorfer Strasse 89**
**22145 Hamburg (DE)**

(56) References cited:
| | |
|---|---|
| **EP-A1- 1 083 618** | **EP-A2- 1 333 520** |
| **CN-Y- 2 537 128** | **JP-A- 5 166 500** |
| **JP-A- 8 273 702** | **JP-A- H1 167 166** |
| **JP-A- 2001 176 467** | **JP-A- 2001 338 686** |
| **JP-A- 2002 251 989** | **JP-A- 2002 252 036** |
| **JP-A- 2002 352 863** | **JP-A- 2003 007 287** |
| **JP-A- 2003 187 781** | **JP-A- 2003 187 857** |
| **JP-A- 2003 208 895** | **JP-A- 2003 217 594** |
| **JP-A- 2003 229 117** | **JP-A- 2003 338 275** |
| **JP-A- 2003 346 798** | **JP-A- 2004 047 161** |
| **JP-A- 2004 079 481** | **US-A- 4 292 381** |
| **US-A1- 2003 113 621** | **US-B1- 6 287 720** |
| **US-B1- 6 291 102** | **US-B1- 6 365 300** |

**Description**

Technical Field

The present invention relates to a lithium ion secondary battery, in particular to a high output lithium ion secondary battery.

Background Art

Heretofore, various rechargeable secondary batteries have been proposed as power sources for small and high portable electronic appliances. Among them, since a lithium ion secondary battery has high battery voltage, high energy density, and little self-discharge, and excels in cycle characteristics, it is most promising as a small and light battery.
Recently, the application of a lithium ion secondary battery is considered as a power source for electric vehicles and hybrid vehicles substituting motor vehicles that use internal combustion engines, which cause air pollution and global warming. Furthermore, studies for applications to space development, such as an artificial satellite, and to electric power storage have been started. For such use with large equipment, a lithium ion secondary battery also having high output and long life is required.
As a material for the positive electrode in a lithium ion secondary battery, a composite oxide of lithium and a transition metal element has been proposed, and lithium cobaltate is mainly used. However, since cobalt itself is a rare metal and expensive, inexpensive lithium manganate is considered for the use in large equipment. Although the material for the negative electrode is basically lithium metal, from the viewpoint of the problem of electrode dissolution due to repeated charge and discharge, a lithium alloy or a material that can store lithium, especially a carbonaceous material is mainly used. These materials for positive and negative electrodes are normally ground and classified into powder having a suitable particle size, and then mixed with a conductive material and a binder to a mix. The mix is subjected to steps, such as applying to a current collector, drying, rolling, compressing, and cutting, to fabricate electrodes.
There have been many proposals for improving energy density, output density, cycle characteristics or the like, which are important characteristics in a lithium ion secondary battery. For example, in Patent Document 1 (Japanese Patent Application Laid-Open No. 2000-30745), in order to provide a lithium ion secondary battery that can be charged and discharged rapidly; and has high breakdown voltage, high capacity, high energy density and high charge-discharge cycle reliability, the thicknesses of a positive electrode and a negative electrode are specified. Specifically, it has been proposed that a positive electrode has a thickness of 80 to 250 $\mu$m, while a negative electrode is formed to have a thickness of 7 to 60% of the thickness of the positive electrode, within a range between 10 and 150 $\mu$m. In general, in order to improve the energy density of a lithium ion secondary battery, active material applying thickness is increased to about 100 $\mu$m, and an active material of a large particle size of about 20 $\mu$m is used. In Patent Document 1, the particle size of the active material is not described, and alternatively, the use of activated carbon having a specific surface area of 800 to 3000 m$^2$/g as the positive electrode, and the use of a carbonaceous material having a face distance of the [002] face measured by X-ray diffraction of 0.335 to 0.410 nm { For a lithium secondary battery with a non-particulate negative electrode, a similar observation is was made. In US-B1-6 365 300, a battery having a reduced risk of short circuits between the positive electrode and the negative electrode is disclosed. In order to avoid dendrimer metal deposition which can short-circuit the electrodes during repetitive charge/discharge cycles, an inorganic solid electrolyte is provided between the positive electrode and the negative electrode. Such a battery is manufactured by laminating the electrodes and the solid electrolyte layer together, followed by sealing the laminated structure within a battery case. as the negative electrode are described.
A lithium ion secondary battery of a high output is proposed for the use in the power source for hybrid vehicles or the like. In Patent Document 2 (Japanese Patent Application Laid-Open No.11-329409) and Patent Document 3 (Japanese Patent Application Laid-Open No. 2002-151055), in order to provide a lithium ion secondary battery of a high output density, the active material applying thickness is specified to be 80 $\mu$m or less, and at the same time, the particle size of the active material is specified to be 5 $\mu$m or less. Furthermore, in Patent Document 3, it is described that by increasing the quantity of the electrolyte solution in the electrode, the capacity of lithium ion transportation in the electrolyte solution in the electrode in the film thickness direction is increased and the output density is improved, and the porosity if preferably 50 to 60%. It is also proposed that by constituting the active material layer by two layers having different porosities, the output density can be improved without impairing the energy density, and specifically, it is proposed that the porosity of the active material layer in the current collector side is 30 to 50%, and the porosity of the active material layer in the separator side is 50 to 60%. On the other hand, when lithium manganate is used as the positive electrode active material, Patent Document 4 (Japanese Patent Application Laid-Open No. 11-185821) describes that a battery system of a high output to meet a large battery can be obtained by making the thickness of the positive mix layer four times or less of the thickness of the current collector, and making the 50% accumulated particle size 5 to 15 $\mu$m. In order to raise the output, there is proposed a method contrary to the purpose of improving energy density wherein an active material having a small particle size is used, and a thin active material layer having a high porosity is formed. { Likewise, in JP 2003 007 287 A, a button-type small lithium secondary battery is described which is designed to designed to shorten the charging rate. This battery comprises a positive electrode, a negative electrode and a non-aqueous electrolyte enclosed within a rigid metal casing. The positive electrode comprises, as the active material, a covering layer of a particulate lithium-containing composite oxide whereas the negative electrode comprises, as the active material, a mix layer comprising particulate carbonaceous material having a thickness of 100 μm or less. The average particle size of the carbonaceous material is maximum twice the average particle size of the lithium-containing composite oxide and, in particular, amounts to 5-20 μm. Of course, since the absolute output power of button-type batteries is relatively low due to the small size of these batteries, these batteries are not suited for power sources in electric vehicles or hybrid vehicles.

In Patent Document 5 (Japanese Patent Application Laid-Open No. 11-297354), it is described that in a non-aqueous electrolyte solution secondary battery using a positive electrode that contains an oxide of manganese or a composite oxide of lithium and manganese, and a negative electrode containing lithium metal, lithium alloy or a material that can dope and dedope lithium as composing elements, if a non-aqueous electrolyte solution containing 20% by volume to 30% by volume of ethylene carbonate as the non-aqueous electrolyte solution, wherein at least $LiBF_4$ is dissolved in a concentration of 2.0 mol/l to 5.0 mol/l, the problem of significant deterioration of conservative characteristics and cycle characteristics at high temperatures is solved.

A positive electrode and a negative electrode, which are formed by applying an electrode active material onto a current collector, constitute a battery element by stacking through a separator composed of a porous film, such as polyolefin-based porous film or the like. The battery element is wound, and after inserting an insulation plate on the bottom of a cylindrical packaging can, the wound battery element is inserted, a negative electrode lead terminal is welded to the bottom of the packaging can, a positive electrode lead terminal is welded to a positive electrode cap, thereafter, the electrolyte solution is charged therein, and finally, the positive electrode cap is sealed to the packaging can to complete the product. In the case of a rectangular battery, a battery element wound in an elliptic shape is inserted into a rectangular packaging can. However, when the packaging can is a cylindrical packaging can, since an aluminum can is used without using nickel-plated iron or stainless steal to reduce the weight, normal welding methods cannot be applied, but laser welding is performed.

Since a large battery such as used in the power source of electric vehicles or hybrid vehicles is often used under large-current discharge, effective heat dissipation treatment of heat generated by the internal resistance of the battery is an important problem. Normally, since a required current quantity cannot be obtained by a unit cell, a plurality of unit cells is combined in series to be used as assembled cells. When such a unit cell or assembled cells are mounted onto an electric vehicle or a hybrid vehicle, a support member having an external cooling means is used considering heat dissipation.

Although heat on the battery surface can be removed using the external cooling means, since the design of a large battery is the extension of the design of a small battery, and wound battery element is inserted in a cylindrical or rectangular packaging can to constitute a battery, heat is easily accumulated in the battery due to Joule heat by the internal resistance of the battery in charge and discharge, or heat generation due to change in entropy caused by entering and going out of lithium ions into and from the active material, and temperature difference between inside and surface of the battery causing variation in the internal resistance, and as a result, fluctuation of charge quantity and voltage occurs easily.

Whereas, as a method for improving heat dissipation of the battery itself, for example, in Patent Document 6 (Japanese Patent Application Laid-Open No. 11-144771), a method wherein a sheet-shaped or needle-shaped heatsink is wound together with positive and negative electrodes and a separator to transfer heat in the battery to the battery case through the heatsink. The Patent Document also proposes the use of a positive current collector wider than a negative current collector as a heatsink. A proposal to change the shape of the current collector to improve heat dissipation is described in Patent Document 7 (Japanese Patent Application Laid-Open No. 2000-277087). In this Patent Document, a structure of an electrode plate wherein the thickness of the current collector is locally thickened, and heat generated in the battery is effectively allowed to escape in a direction parallel to the laminate surface using the thickened part is proposed.

In Patent Document 8 (WO99/60652), a non-aqueous secondary battery that excels in heat dissipation characteristics by flattening the shape of the battery case, having an energy capacity of 30 Wh or more, and a volume energy density of 180 Wh/l is disclosed. In this. Patent Document, it is described that the temperature of the battery surface in a large-capacity secondary battery rises little by making the thickness less than 12 mm. However, with respect to the thickness of the battery in the Patent Document, no critical significance is observed in the values.

However, since most of these proposals relate to a battery using a metal battery can, there is a limitation in the reduction of weight and thickness Although the reduction of weight and installing volume of assembled cells (Battery unit) is important for the power source for electric vehicles and hybrid vehicles, it is difficult to say that they can sufficiently deal with this problem.

In recent years, a battery using a packaging body composed by heat-sealing a laminate film wherein a plastic film and a metal film are laminated and integrated (known as laminate case) is actively studied and developed, and a laminate case battery achieving significant reduction of weight and thickness has been practically used as a power source for small portable appliances. However, if such a laminate case is simply applied to a secondary battery for the purpose of high output and high capacity, various problems arise.

As a lithium ion secondary battery using a laminate case, a polymer electrolyte secondary battery wherein the liquid organic electrolyte in an { A conventional battery of the alkaline type or the nickel-zinc type in which positive electrodes and negative electrodes are alternatingly stacked is known from US-A-4 292 381. In order to improve the dissipation of heat generated in this battery, the rigid casing is provided with two cooling pipes each of which being in thermal contact with the tabs of either the positive electrodes or the negative electrodes. The battery is cooled by pumping a cooling liquid though the cooling pipes. In order to improve the cooling efficicncy, the contact area between the cooling pipes and the electrode tabs is enlarged by increasing the width of the electrode tabs. ordinary lithium ion secondary battery is substituted by various polymer materials has been developed. In order to achieve high capacity and high output, for example, as shown in Patent Document 9 (Japanese Patent Application Laid-Open No. 9-259859), a plurality of unit cells having a polymer electrolyte are combined in series, in parallel, or in series-parallel to use as assembled cells. In this Patent Document, assembled cells are disclosed wherein a pair of recessed parts is formed on the peripheral edges of a sheet-shaped thin battery from which positive electrode terminals and negative electrode terminals separated from each other are led out of the peripheral edge part, and both terminals are led in the recessed part to secure a relatively large battery element part; and by leading each terminal in the recessed part of the peripheral edge, a battery pack facilitating the combination of parallel, series, and parallel-series.

However, when the batteries are used for assembled cells, since a larger current compared with the case of using as a unit cell, if temperature rise is excessively large because heat generation is significant, and temperature rise of the entire assembled cells is marked, there is a possibility that the life of the battery is shortened, or the battery is damaged. In particular, there is a problem that the sealed part of the laminate case is easily peeled off due to heat generation in the terminal part.

Patent Document 10 (Japanese Patent Application Laid-Open No. 2003-17014) discloses that in order to reduce the possibility of meltdown of a lead or melting of a packaging case by securing a sufficient allowable current in the lead, and to prevent the occurrence of defective or insufficient sealing of the packaging case, the ratio of the total value X of the widths of leads taken out of a side of the packaging case and the length Y of the side, X/Y is 0.4 or less, the length Y of the side is 20 mm or less, and the lead has a sectional area that can secure an allowable current corresponding to 5 times the discharge (charge) current value for discharging (charging) the battery for 1 hour. In this example, however, a small battery having a side of 20 mm long or less is disclosed, and it cannot be applied to a large battery to take out a large electric power. The battery disclosed here also assumes the use of a polymer electrolyte. Furthermore, since a small battery is assumed, the security of heat dissipation, in particular the security of heat dissipation in the case of using as a battery pack is not examined in any way.

Although a secondary battery using a polymer electrolyte is advantageous for manufacturing a small light secondary battery that quantitatively discharge a predetermined voltage, in order to use it as a large battery, especially as a power source for hybrid vehicles requiring a large current in a short time, the mobility of lithium ions is low, and cannot meet the requirement.

[Patent Document 1] Japanese Patent Application Laid-Open No. 2000-30745
[Patent Document 2] Japanese Patent Application Laid-Open No. 11-329409
[Patent Document 3] Japanese Patent Application Laid-Open No. 2002-151055
[Patent Document 4] Japanese Patent Application Laid-Open No. 11-185821
[Patent Document 5] Japanese Patent Application Laid-Open No. 11-297354
[Patent Document 6] Japanese Patent Application Laid-Open No. 11-144771
[Patent Document 7] Japanese Patent Application Laid-Open No. 2000-277087
[Patent Document 8] WO99/60652
[Patent Document 9] Japanese Patent Application Laid-Open No. 9-259859
[Patent Document 10] Japanese Patent Application Laid-Open No. 2003-17014

Moreover, US 2003/112621 discloses a lithium secondary battery which has a ratio B/A=1 and is covered with a laminate case, wherein A is a width of a region of the active material region perpendicular to the direction of current and B is a width of the electrode terminal perpendicular to the direction of current.

US 6,291,102 B1 discloses a lithium secondary battery in which the electrode active materials have a particle size of 0.3 to 20 $\mu$m.

EP 1 333 520 A2 forming part of the state of the art pursuant Article 54(3) EPC discloses a flat-type cell and a combined battery utilizing the same, the flat-type cell comprising a positive electrode terminal made of nickel of 100 $\mu$m

thickness and a negative electrode terminal made of aluminum of 100 $\mu$m thickness, respectively.

Disclosure of the Invention

Problems to be solved by the Invention

An object of the present invention is to comprehensively study the problems in conventional secondary batteries and to provide a lithium ion secondary battery from which a high output can be obtained using a laminate case useful for weight and thickness reduction and providing the battery with improved heatsink properties.

Means for S olving the Problems

As a result of extensive studies to solve the above-described problems, the present inventors have completed the following present invention.

That is, the lithium ion secondary battery of the present invention is a

Effects of the Invention

According to the present invention, a high output, high capacity lithium ion secondary battery can be made light and thin, and a lithium ion secondary battery that excels in heatsink properties can be provided.

Brief Description of the Drawings

Figure 1 is a schematic sectional view for illustrating a battery element of the present invention;
Figure 2 is a conceptual diagram showing an example of the relation between an electrode and a lead terminal of the present invention;
Figure 3 is a graph showing the relation between the percentages of the terminal width to the electrode leading out width and current passing distance;
Figure 4. is a conceptual diagram showing another example of the relation between an electrode and a lead terminal of the present invention;
Figure 5 is a conceptual diagram showing a further example of the relation between an electrode and a lead terminal of the present invention;
Figure 6 is a schematic diagram showing an example when a lead terminal is used as a heatsink;
Figure 7 is a schematic diagram showing another example when a lead terminal is used as a heatsink;
Figure 8 is a perspective view before sealing a lithium ion secondary battery held in a laminate case; and
Figure 9 is a graph showing capacities (%) at 2.5 A to 75 A in the Example and each Comparative Example.

Description of Symbols

| 1 | Positive electrode active material layer |
| 2 | Negative electrode active material layer |
| 3 | Positive current collector |
| 4 | Negative current collector |
| 5 | Separator |
| 6 | Positive electrode lead terminal |
| 7 | Negative electrode lead terminal |
| 8 | Heat seal part |
| 11 | Active material region |
| 12 | Current collecting part |
| 13 | Lead terminal |
| 21 | Lead terminal |
| 211 | Heat seal part |
| 22 | Electrode |
| 23 | Laminate case |

| 31 | Laminate film (cup-shaped case) |
| 32 | Laminate film (covering material) |
| 33 | Electrode group |
| 331 | Current collecting part |
| 34 | Lead terminal |
| 341 | Heat seal part |

Best Mode for Carrying Out the Invention

The configuration of a lithium ion secondary battery of the present invention will be described in detail.

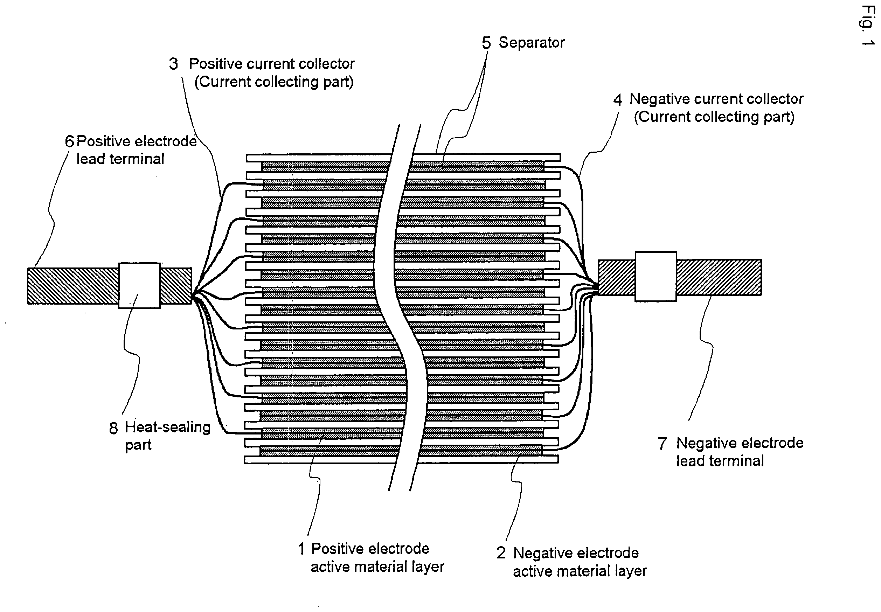

Figure 1 is a schematic sectional view of a battery element for a lithium ion secondary battery of the present invention. Positive electrode active material layers 1 are formed on both sides of positive current collector 3 to constitute a positive electrode, and negative electrode active material layers 2 are formed on both sides of negative current collector 4 to constitute a negative electrode. These positive electrodes and negative electrodes are alternately stacked so that separators 5 are interposed to constitute an electrode group. No active material layers are applied to a part of each positive and negative current collector to constitute a current collecting part; and in Figure 1, positive electrodes and negative electrodes are stacked in such a way that the current collecting parts of positive current collectors 3 and the current collecting parts of negative current collectors 4 are led out to facing sides. The current collecting part of positive current collector 3 is connected to positive electrode lead terminal 6, and the current collecting part of negative current collector 4 is connected to negative electrode lead terminal 7. In Figure 1, heat-sealing part 8 is previously applied to each of the positive and negative electrode lead terminals.

The positive electrode active material of the lithium ion secondary battery of the present invention is not specifically limited as long as it is a lithium-based positive electrode active material, generally a composite oxide of lithium and a transition metal element, and lithium cobaltate, lithium nickelate, lithium manganate, a mixture thereof, or a system wherein one or more different metal element is added to these composite oxides can be used. Lithium manganate, which can be stably supplied for large batteries and has a high thermal decomposition temperature, is preferable.

On the other hand, the negative electrode active material is not specifically limited as long as it is a negative electrode material that can store and discharge lithium ions, and a heretofore known carbon material, such as graphite (natural or artificial) and amorphous carbon can be preferably used.

The positive and negative electrode active materials in the present invention must have a predetermined average particle size. If the average particle size is excessively large, the thickness of an active material layer for achieving high output and high capacity is difficult to achieve; therefore, both the positive electrode active material and the negative electrode active material must have an average particle size of 10 $\mu$m or less. On the other hand, if the average particle size is excessively small, a large quantity of fine powder of 1 $\mu$m or less is contained, the quantity of additives, such as a binder added for holding them as an electrode, must be increased, and as a result, the internal resistance of active material layers elevates and the active material layers generate heat more easily; therefore, a positive electrode active material with an average particle size of 3 $\mu$m or more and a negative electrode active material having an average particle size of 5 $\mu$m or more are used.

In each of the positive electrode and positive electrode in the present invention, active material layers are formed on both surfaces of a current collector (metal foil). The active material layers are formed so that in the positive electrode, the thickness excluding the current collector is 30 $\mu$m or more and 110 $\mu$m or less, preferably 100 $\mu$m or less; and in the negative electrode is 30 $\mu$m or more and 100 $\mu$m or less, preferably 80 $\mu$m or less. For electrodes disposed on the outermost part of the laminate, since no facing electrodes exist outside them, an electrode provided with an active material layer only on a surface facing inward can be used. In this case, the thickness of the active material layer can be 1/2 the above-described range.

Here, although the thickness of the current collector is not specifically limited as long as the thickness can secure the allowable current value, if it is excessively thin, it becomes difficult to sufficiently conduct heat to the terminal part; therefore, the thickness of the positive current collector is preferably 20% or more of the thickness of the positive electrode active material layer; and the thickness of the negative current collector is preferably 10% or more of the thickness of the negative electrode active material layer. For the upper limit, since the weight of a battery and the entire thickness of the battery increase according to the thickness of the current collection, thickening more than required is disadvantageous. Normally, when an aluminum foil is used as positive current collector, considering availability, the thickness is 10 $\mu$m to 50 $\mu$m, preferably 15 $\mu$m to 30 $\mu$m; and when a copper foil is used as negative current collector, the thickness is 5 $\mu$m to 50 $\mu$m, preferably 5 $\mu$m to 20 $\mu$m.

When active material layers are formed on the current collector, each of the positive and negative electrode active material is evenly dispersed in a suitable binder resin solution to prepare slurry. At this time, various carbonaceous conductivity donors, various molding coreagents or the like may be added as required. Next, the obtained slurry is applied onto the current collector in an even thickness using a coater, dried, and when the active material layers are formed on both surfaces, after applying onto another surface and drying in the same way, it is compressed under a pressure not breaking the shape of the active material to form active material layers having the above-described thickness. At this time, by forming a stripe-shaped uncoated part to which the active material is not applied on the current collector, and cutting the uncoated part together, each electrode can be obtained. By forming the stripe-shaped uncoated part, an uncoated part having the width of the active material layer can be formed, which becomes a current collecting part used for connecting with a lead terminal in a subsequent step. Particularly in the present invention, since the lead terminal described below is formed to be wider than conventional lead terminals, it is desirable to use the uncoated part of the width of the active material layer as the current collecting part as it is. Of course, the formation of the current collecting part of the width of the active material layer in tab-shaped to meet the width of the lead terminal as required is not precluded.

A plurality of the positive and negative electrodes thus formed can be stacked in such a way that separators are interposed and the positive electrode active material layers and negative electrode active material layers face one another, and at this time, they are stacked so that the current collecting part of the positive electrode and the current collecting part of the negative electrode are led out to the regions separated from each other, for example, they are present on the side opposing one another.

For the separator used here, polyolefins, such as polyethylene and polypropylene, fluorine-substituted polyolefins, polyacrylonitrile, polyaramid or the like, which are normally used in a lithium ion secondary battery, can be used. Although the thickness of the separator is not specifically limited, if it is excessively thick, the rate performance becomes insufficient, the volume energy density lowers, and the quantity of the electrolyte solution for impregnation is relatively increased, causing increase in weight of the battery, and further, heat accumulation in the battery. On the contrary, if it is excessively thin, self-discharge occurs easily. Normally, the upper limit is 50 $\mu$m or less, preferably 30 $\mu$m or less; and the lower limit is 5 $\mu$m or more, preferably 10 $\mu$m or more.

Next, a positive electrode lead terminal and a negative electrode lead terminal are connected to the positive and negative current collecting parts of the battery element, respectively. The lead terminals in the present invention are formed to be wider than conventional lead terminals focusing heat dissipation. In Patent Document 10 described above, since two electrodes are taken out of one side, the lead terminal of each electrode can be formed to have only less than 50% the battery width, and if the distance between the two electrodes is narrowed, sealing becomes insufficient; therefore, the total width of the lead terminals is 40% or less of the battery width. However, in the present invention, since the terminal of only one electrode is taken out of one side, the current passing distance is shortened by widening the width, and heat generation in the terminal part is suppressed, defective sealing is difficult to obtain in the structure. The present invention is constituted so that the proportion of the width B of a terminal to the width A of an active material layer, the B/A value, is 57% or more.

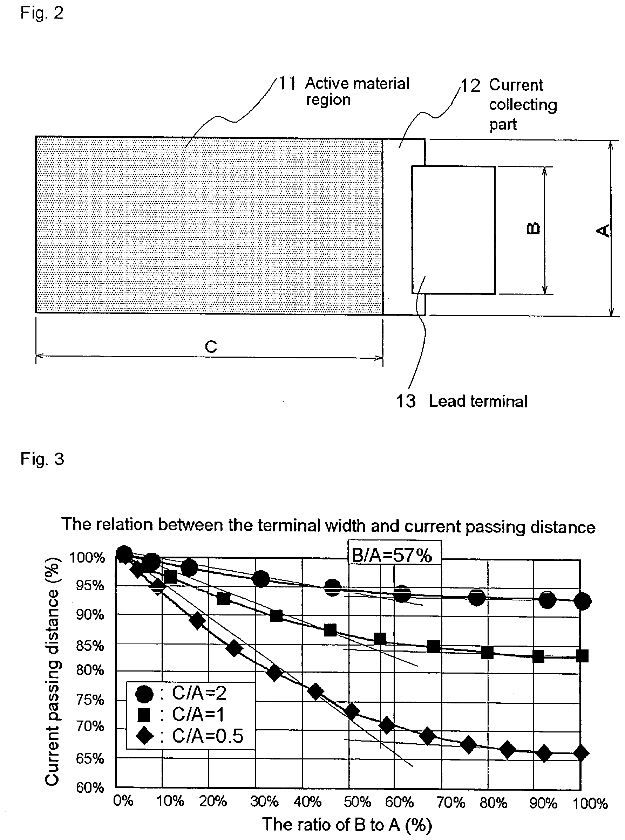

In Japanese Patent Application No. 2002-26147, the present inventor examines the terminal width in detail. In the Application, as Figure 2 shows, rectangular electrodes (positive electrode and negative electrode) are considered, the width and length of region (active material region) 11 to which an active material is applied are represented by A and C, respectively. Lead terminal 13 is fixed to current collecting part 12, which is an uncoated part of the active material of the current collector, and the width of the lead terminal is represented by B.

Figure 3 is a graph of the relation between the current passing distance in the model of Figure 2 obtained by simulation and B/A. In Figure 3, the current passing distance is shown by the ratio when the B/A ratio is 1% and the current passing distance is 100%. Since the current passing distance and the heat value are in substantially proportional relation, the heat value is suppressed as the current passing distance is shortened. Here, referring to Figure 3, in spite of the ratio of C to A (C/A), the current passing distance is shortened when the B/A value is 57% or more. Therefore, when the B/A value is 57% or more, the heat value is effectively suppressed. Furthermore, the shortening of the current passing distance has also the effect to lower the internal resistance of a battery. This aspect also distributes to the suppression of heat generation from the battery element.

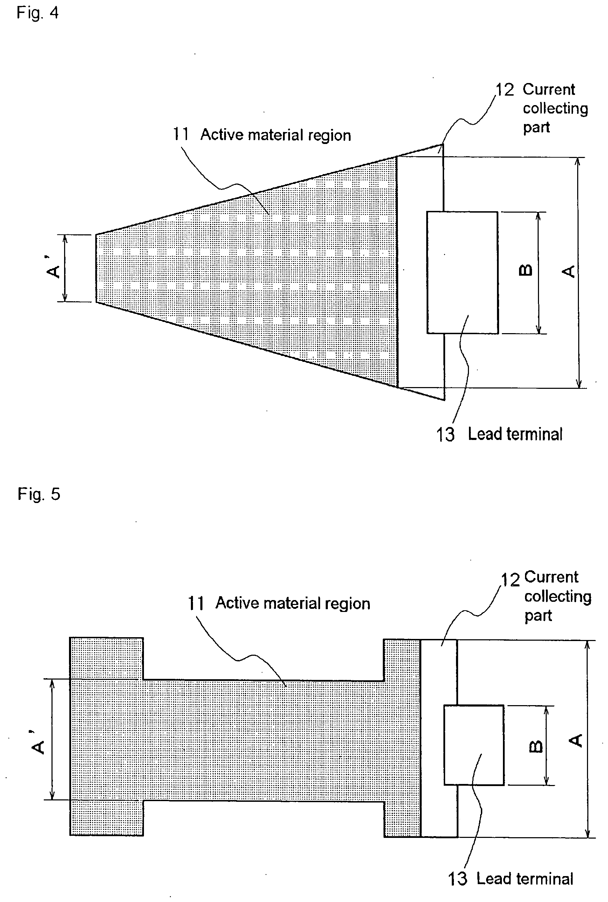

Since a rectangular electrode is used in the above-described example, the width A of the active material region is constant; however, when a current collector having other shapes is used, there are cases wherein the width of the active material region is not constant, and in such cases, the narrowest width (supposedly referred to as A') of the widths in the vertical direction to the direction wherein the lead terminal is led out is deemed to be the width of the active material region. This is because the current passing distance is determined depending on the narrowest width of the widths of active material region 11. However, if the region having the narrowest width is present in the middle of the current passing path, it is obvious that the width is not so narrow as the sectional area of the current collector cannot secure the allowable current value. For example, in the electrode shape shown in Figure 4, the side opposing the lead terminal connecting part, which is the starting point of the current passing path, has the narrowest width A'; and the example shown in Figure 5 has a structure wherein the middle of the current passing path is constricted, and the width of this part is the narrowest width A'. Therefore, although there are cases where B is larger than A', the width B of a lead terminal is normally not wider than the width of a current collecting part.

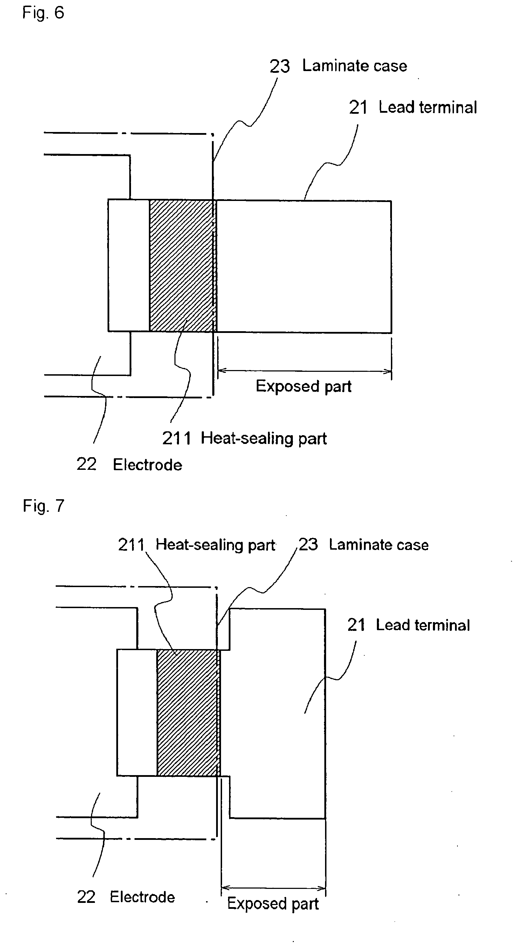

When a laminate case is sealed with heat-sealing or the like, sealing is performed across the lead terminal; however, it is normally preferable that on the lead terminal, the sealing part is subjected to a treatment to improve the adhesiveness with the laminate material in order to perform sealing safely. For example, in order to strengthen the adhesiveness of the lead terminal composed of a metal material with the laminate material composed of a thermoplastic resin, a known primer treatment is performed, or the thermoplastic resin used for the laminate material is previously applied to the lead terminal as a sealing material. At this time, by expanding the surface area of the part of the lead terminal exposed externally than the surface areas of the current collector connecting part of the lead terminal and the sealing part, the lead terminal can function as a heatsink. For example, as shown in Figure 6, the length of lead terminal 21 (direction of the current, direction perpendicular to the above-described width) can be constituted so that the exposed part is longer; or as shown in Figure 7, the width of the exposed part can be constituted to be continuously or stepwise widened from the current collector connecting part to expand the surface area. In Figures 6 and 7, reference numeral 211 denotes a heat-sealing part applied for the purpose of improving the adhesiveness with the laminate film, and heat-sealing of the laminate film is performed in this part. Reference numeral 22 denotes the electrode, 23 denotes the laminate case.

The group of electrodes to which lead terminals are attached is sealed in a laminate case. The laminate film used for the laminate case is normally composed of three layers of a base material, a metal foil and a sealant. The base material constitutes the outside of the laminate case, and a resin that excels in chemical resistance and mechanical strength, such as polyester (PET) and nylon, is used. The intermediate metal foil prevents invasion of gas or moisture, and provides shape keeping properties, and a single metal, such as aluminum, iron, copper, nickel, titanium, molybdenum and gold; an alloy, such as stainless steal and Hastelloy; or the like can be used. Particularly, aluminum, which excels in workability, is preferable. As sealant, a thermoplastic resin that enables sealing by heat-sealing, and excels in chemical resistance, such as polyethylene (PE), modified polypropylene (PP), ionomers, and ethylene-vinyl acetate copolymer, is preferable. The thickness of the base material is about 10 to 50 $\mu$m, preferably about 15 to 30 $\mu$m. If the metal foil is excessively thick, workability and light weight, which are advantages of the laminate case, are lost; and if it is excessively thin, processing as a laminate film is difficult, or the prevention of invasion of moisture or the like or shape keeping properties are inferior; therefore, a metal foil having a thickness of 10 to 50 $\mu$m, preferably 20 to 40 $\mu$m is normally used. The sealant in not specifically limited as long as it has a thickness that enables sufficient sealing using heat-sealing (normally 160 to 180°C for about 5 seconds), but normally, the thickness is 100 $\mu$m or less, preferably 80 $\mu$m or less, and in order to strengthen sealing, the thickness is preferably 50 $\mu$m or less. However, since the mechanical strength is insufficient if the sealant is excessively thin, at least 10 $\mu$m is required.

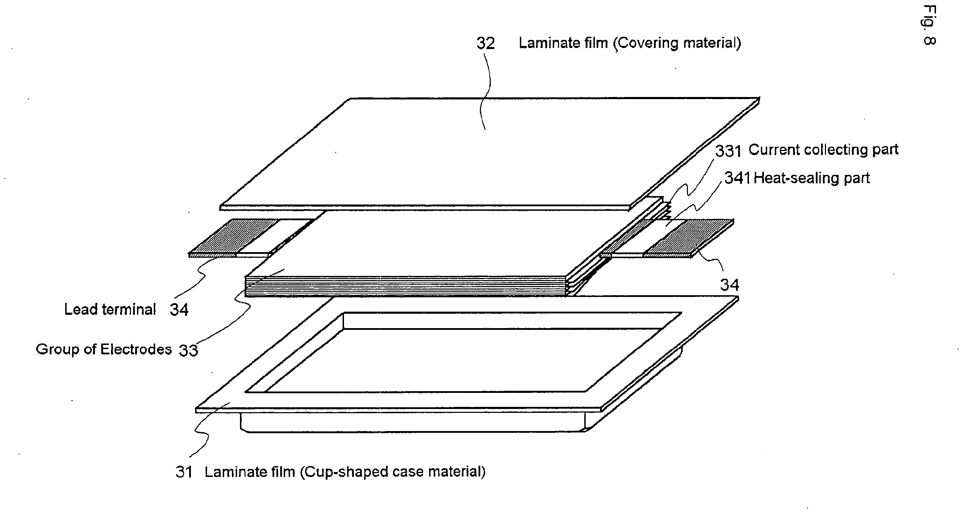

In order to constitute a battery using such a laminate film, a method wherein the laminate film is previously molded into a case shape, or the group of electrodes is directly covered with the laminate film for sealing, can be used. For example, as shown in Figure 8, group of electrodes 33 wherein above-described lead terminal 34 is fixed to current collecting part 331 is placed in deep-drawn molded cup-shaped case member 31. At this time, heat-sealing part 341 of lead terminal 34 is disposed so as to ride on the flange part of case member 31. Laminate film 32, which is a covering material, is overlaid, and a part of the flange part of the cup (not the sides for taking out the lead terminal) is heat-sealed. Then, the sides for taking out the lead terminals are heat-sealed, a predetermined electrolyte solution is injected from a remaining side, after electrolyte injection, reduced-pressure defoaming is performed, and finally, a remaining side is heat-sealed in a reduced pressure state using a vacuum sealing machine to obtain a lithium ion secondary battery of the present invention. In two sides, which are not the sides for taking out the lead terminals, the laminate film can be folded back before heat-sealing.

In the present invention, different from a conventional polymer electrolyte battery using a laminate case, a liquid electrolyte is used for achieving high output and high capacity. As the liquid electrolyte, a non-aqueous electrolyte solution normally used in a lithium ion secondary battery can be used; as the solvent, cyclic carbonate esters, straight-chain carbonate esters, cyclic ethers, straight-chain ethers, cyclic esters, straight-chain esters, and mixed solvents thereof can be used; and as the supporting electrolyte, various lithium salts can be used.

Thus, in the present invention, a lithium ion secondary battery having having a 10-second output value of 3000 W/kg or above at a depth of discharge capacity of 50% and 25°C can be manufactured. Although the lithium ion secondary battery of the present invention is a battery having an extremely high capacity also as a unit cell, further a plurality of batteries can be connected to constitute assembled cells of desired voltage and capacity. For example, batteries can be laminated with their positive electrodes in one side and negative electrode in the other side to obtain assembled cells of parallel connection. If positive and negative electrodes are alternately connected, assembled cells of serial connection can be obtained. Assembled cells can also be constituted by using the combination of parallel connection and serial connection, and serial, parallel, or series-parallel assembled cells of a free layout utilizing space effectively can be obtained. Since the lithium ion secondary battery of the present invention has a capacity per unit cell larger than the capacity of a conventional lithium ion secondary battery, the assembled cells can be constituted using a smaller number of unit cells for obtaining predetermined voltage and capacity, and by adopting a laminate case, extremely light assembled cells can be produced.

Furthermore, in the present invention, by blowing the cooling air to the exposed part of the lead terminal, the effect as a heatsink for the lead terminal can be raised.

Examples

The present invention will be specifically described below referring to examples; however, the present invention is not limited to only these examples.

Example 1

Lithium manganate powder having a spinel structure of an average particle size of 5 μm, a carbonaceous conductivity donor, and polyvinylidene fluoride were mixed and dispersed in N-methyl-2-pyrrolidone (NMP) in a weight ratio of 90:5:5; and agitated to form slurry. The quantity of NMP was adjusted so that the slurry had a suitable viscosity. The slurry was applied onto one side of an aluminum foil having a thickness of 20 μm, which became a positive current collector, using a doctor blade. On applying, an uncoated part (the part where the current collector was exposed) was made to be slightly formed in a stripe shape. Next, it was dried in vacuum at 100°C for 2 hours. In a similar way, the slurry was applied onto the other surface, and dried in vacuum. At this time, both sides of uncoated parts were made to be aligned. The sheet onto both sides of which the active material was applied was roll-pressed. At this time, the pressing pressure was adjusted to make the thickness of the positive electrode excluding the current collector become 75 microns. The pressed sheet was cut including the uncoated part into 18 rectangular (90 mm W × 150 mm L) samples. Since the part where the active material was not applied was the part to be connected to the lead terminal, it was formed on the shorter side. Thus, positive electrodes having a total theoretical capacity of 3 Ah were prepared.

On the other hand, amorphous carbon powder having an average particle size of 10 μm and polyvinylidene fluoride were mixed and dispersed in NMP in a weight ratio of 91:9; and agitated to form slurry. The quantity of NMP was adjusted so that the slurry had a suitable viscosity. The slurry was applied onto one side of a copper foil having a thickness of 10 microns, which became a positive current collector, using a doctor blade. On applying, an uncoated part (the part where the current collector was exposed) was made to be slightly formed in a stripe shape. Next, it was dried in vacuum at 100°C for 2 hours. At this time, the quantity of the applied active material was adjusted so that the ratio of the theoretical capacity per unit area of the negative electrode layer to the theoretical capacity per unit area of the positive electrode layer became 1:1. In a similar way, the slurry was applied onto the other surface, and dried in vacuum. The sheet onto both sides of which the active material was applied was roll-pressed. At this time, the pressing pressure was adjusted to make the thickness of the negative electrode excluding the current collector become 70 microns. The pressed sheet including the exposed part was cut into 18 rectangular samples of horizontal and vertical sizes 2 mm larger than the horizontal and vertical sizes of the positive electrode. The part where the active material was not applied was the part to be connected to the lead terminal. Thus, negative electrodes were prepared.

The positive electrodes and negative electrodes prepared as described above were laminated in such a way that rectangular polypropylene separators each having a length and width 2 mm larger than the length and width of the negative electrode were interposed between them. A negative electrode was laminated so as to be on the outermost side of the electrodes, and a separator was placed on further outside of the negative electrode (in the order of separator / negative electrode / separator / positive electrode / separator /...... / negative electrode / separator). The parts where the active material was not applied of the positive electrodes were placed in the side opposing the side of the parts where the active material was not applied of the negative electrodes (so that positive and negative lead terminals had orientations opposite to each other). After all the layers were laminated, the laminate was fixed with adhesive tapes at 4 places so as to prevent interlayer slippage. Next, an aluminum sheet that became a positive electrode lead terminal having a thickness of 0.2 mm, a width of 60 mm and a length of 50 mm (the direction of the current is "length" direction; B/A = 0.67), and the parts onto which the active material was applied of 8 positive electrodes were ultrasonically welded together. In the same way, a nickel-plated copper sheet having a thickness of 0.2 mm, a width of 60 mm and a length of 50 mm (B/A = 0.65), and the parts onto which the active material was applied of 9 negative electrodes were ultrasonically welded together. Prior to the above-described welding connection, a resin film (hereinafter lead coating resin) consisting of the laminate of electron beam cross-linked polypropylene (50 μm) and acid-modified polypropylene (50 μm, melting point: 130°C to 140°C) was previously heat-sealed on both surfaces of the part to be sealed by the casing body with the latter facing the lead side of the positive electrode lead terminal and negative electrode lead terminal. Its size was determined so that it was protruded by 2 mm in both width directions of the lead terminals (in the protruded parts, the acid-modified polypropylene layers were heat-sealed to each other), and was 12 mm in the length direction of the leads.

On the other hand, as a laminate film for the packaging body, a film consisting of a laminate of 25 μm nylon, 40 μm soft aluminum and 40 μm acid-modified polypropylene (melting point: 160°C) was prepared. The film was cut into a predetermined size, and deep-draw-molded into a cup shape of a size that can house the electrode laminate (substantially the same length and width of the electrode laminate including the lead connecting part, that is the part onto which the active material was not applied). After molding, the film around the cup like the brim of a hat was trimmed leaving a side of 10 mm width. The above-described electrode laminate was placed in the thus molded cup-shaped laminate film. The lead terminals were placed on two locations of the brim part of the trimmed film. The previously heat-sealed resin-film was aligned so as to protrude by 1 mm both inside and outside of the battery across the brim part.

Next, the above-described laminate film only cut into a predetermined size without molding was placed on the cup-shaped part packaging the above-described battery element with the sealed surface facing inward so as to cover the cup-shaped part. The size of the cover was the size identical to the size after molding and trimming, so that they conformed to each other when overlaid.

Next, the lead terminal led out above the brim part of the trimmed film was sealed with the end (brim part) of the packaging body as follows: A heater of a width of 9.5 mm, designed to correspond to the thickness of the lead so that a strong pressure is selectively applied to the lead terminal passing part, and having a dent step was prepared. The length of the dent step was identical to the length in the width direction of the lead terminal of the lead coating resin for each lead terminal. Using the heater, the part of the lead to be sealed was heat-pressed from the outside of the laminate film under predetermined temperature, pressure and time conditions. The pressure and time conditions were constant in all the examples (comparative examples), and only the temperature condition was changed. The reason why the time condition was constant is to compare the example and comparative examples making the tact time constant. When heat pressing was performed, in the horizontal position of the heater, the recessed bump of the heater was accurately aligned to the lead terminal passing part (or lead coating resin), and in the vertical position of the heater, the end part of the heater was aligned so as to be 0.5 mm inside of the end part of the film (so that the end part opposite to the heater contacts the side of the cup-shaped part of the laminate film). Thus, the state wherein the laminate film is heat-sealed at a width of 9.5 to 10 mm, and lead terminal is also liquid-tightly sealed was produced. The state of the outermost layer of the laminate (nylon) at this time was observed, and further, the presence of short-circuiting between the aluminum foil in the laminate film and the lead terminal was checked.

Next, one side (hereafter referred to as long side P) of the sides not the lead terminal leading out part (hereafter referred to as long side P and long side Q) was heat-sealed.

Next, the electrode laminate was tilted with the long side P facing downward, and an electrolyte solution was injected into the electrode laminate through the gap of the long side Q, which was the last unsealed part. The electrolyte solution was composed of 1 mol/liter of $LiPF_6$ as a supporting salt, and a mixed solvent of propylene carbonate and methyl ethyl carbonate (weight ratio: 50:50) as a solvent. After injecting the solution, reduced pressure defoaming was performed. Finally, the long side Q was heat-sealed under a reduced pressure using a vacuum-sealing machine to complete a laminate battery. The capacity was 2.5 Ah.

Comparative Example 1

A laminate battery was completed in the same manner as the Example except that the thickness of the positive electrode and the negative electrode excluding the current collector after roll pressing was 130 microns and 120 microns, respectively. The capacity was 5 Ah.

Comparative Example 2

A positive electrode and a negative electrode were fabricated in the sane manner as in the Example. By winding the positive electrode and negative electrode facing each other through a separator, roll-shaped wound electrodes were obtained. In the wound electrodes, the width of the separator is widest, and the widths were narrowed in the order of the negative electrode and the positive electrode. In the winding terminated part of the wound electrodes, that is, the outermost circumference, several sheets of the separators are wound, and in the part contacting the packaging can, a negative electrode on which no active material was formed was used (specifically, the part contacting the packaging can became a negative current collector).

The wound electrodes were inserted into a cylindrical packaging can of a diameter of 33 mm and a length of 1000 mm, and the negative electrode terminal was connected to the packaging can and the positive electrode was connected to the upper lid. The packaging can was composed of nickel-plated iron or stainless Steel, and takes out a voltage by connecting to the negative electrode terminal. The upper lid was composed of an insulating plate for insulation from the packaging can, and a conductive part for taking out a voltage by connecting to the positive electrode terminal.

The battery assembled as described above was impregnated with an electrolyte solution, and the upper lid was caulked with the packaging can to complete a metal can battery. The capacity was 2.5 Ah.

Comparative Example 3

A laminate battery was completed in the same manner as in the Example except that the width of the lead terminal was 30 mm (B/A = 0.33). The capacity was 2.5 Ah.

Using the above-described batteries, the proportion of the capacity to 1C capacity when continuous discharge was performed at 75 A from 4.2 V (full charge) to 2.5 V (full discharge) and the temperature rise of the surface of the battery when discharged was checked. The results are shown in the following table.

Current discharge was performed at a depth of discharge capacity of 50% (discharge was performed by 50% of total capacity), and the voltage drop after 10 seconds was measured. From I-V characteristics, the maximum current at the discharge lower limit voltage was obtained, and 10-second output values were calculated from the following calculating equation:

$$\text{Power density (W/kg)} = \{\text{Voltage (V1)} \times I_{max} \text{ (A)}\}/\text{Cell weight (g)}$$

Voltage (V1): 2.5 (V)

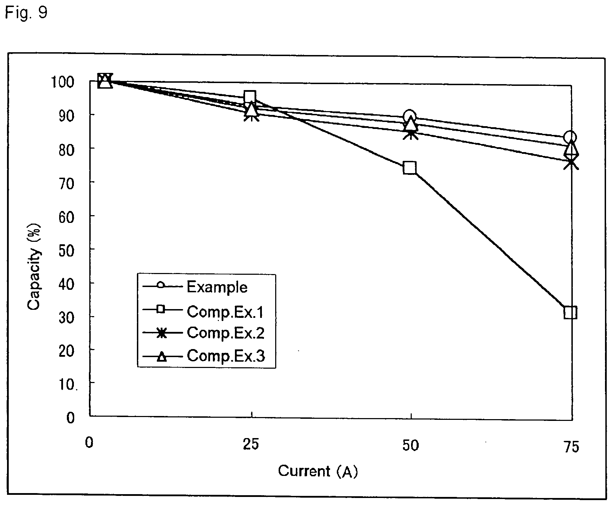

Figure 9 shows capacities (%) at 2.5 A to 75 A.

[Table 1]

| | Capacity (%) | Temperature rise on cell surface (°C/min) | 10-second output value at a depth of discharge capacity of 50%, 25°C (W/kg) |
|---|---|---|---|
| Example | 84 | 6 | 3200 |
| Comparative Example 1 | 32 | 10 | 2700 |
| Comparative Example 2 | 77 | 16 | 2200 |
| Comparative Example 3 | 82 | 12 | 2900 |

From comparison of the Example with Comparative Example 1, it is known that the capacity at large current is improved and the dischargeable time is elongated when the thickness of an electrode is thinned. It is also known that the temperature rise on the surface of a battery is improved when the thickness of the electrode is thinned. Furthermore, from comparison of the Example with Comparative Example 2, it is known that even in the same thickness, the temperature rise on the surface of a battery of the laminate type is smaller. In addition, from comparison of the Example with Comparative Example 3, it is known that the temperature rise on the surface of a battery is large, and a battery having a high output cannot be obtained when the width of a terminal is narrower than the specification of the present invention. Since the laminate-type battery has a large outer area and a short distance between the center and the outer part, its heatsink properties are superior to a cylindrical battery. Therefore, in assembled cells wherein a large number of unit cells are used as an assisting power source of motor vehicles, the distance between batteries can be reduced to produce a compact system of assembled cells.

**Claims**

1. A lithium ion secondary battery comprising

   a battery element obtained by alternately stacking a plurality of positive electrodes having layers (1) of a positive electrode active material formed on both sides of positive current collectors (3) and a plurality of negative electrodes having layers (2) of a negative electrode active material formed on both sides of negative current collectors (4) through separators (5) in such a way that the positive electrode active material layers (1) face the negative electrode active material layers (2), the battery element impregnated with liquid electrolyte and held by a laminate case (23; 31, 32),
   the lithium ion secondary battery having the following configuration **characterized in that**:

   (1) the positive electrode active material has an average particle size of 3 to 10 $\mu$m and a total thickness of the positive electrode active material layers (1) formed on both sides of the positive current collector (3) is 30 to 110 $\mu$m,
   (2) the negative electrode active material has an average particle size of 5 to 10 $\mu$m and a total thickness of the negative electrode active material layers (2) formed on both sides of the negative current collector (4) is 30 to 100 $\mu$m, and
   (3) terminals (6, 7) of the positive electrode and the negative electrode are led out to the outer edge part with the terminals (6, 7) separated from each other and the positive electrode terminal (6) and the negative electrode terminal (7) respectively satisfy the formula:

$$B/A \geq 0.57$$

where A is a width of a region of the active material region (11) perpendicular to the direction of current and B is a width of the electrode terminal perpendicular to the direction of current.

2. The lithium ion secondary battery according to claim 1, **characterized in that** the positive electrode terminal (6) and the negative electrode terminal (7) are led out facing one another.

3. The lithium ion secondary battery according to claim 1 or 2, **characterized in that** parts of the positive electrode terminal (6) and the negative electrode terminal (7) exposed from the laminate case (23; 31, 32) have surface areas wider than the surface areas of the positive electrode terminal (6) and the negative electrode terminal (7) in the laminate case (23; 31, 32).

4. A battery pack comprising a combination of a plurality of lithium ion secondary batteries according to any of claims 1 to 3 through the positive electrode terminal (6) or negative electrode terminal (7).

5. The battery pack according to claim 4, wherein the battery pack has a structure where a cooling air is blown to exposed parts of the positive electrode terminal (6) and the negative electrode terminal (7).

**Patentansprüche**

1. Lithiumionen-Sekundärbatterie umfassend

   ein Batterieelement, das durch abwechselndes Stapeln einer Vielzahl positiver Elektroden mit Schichten (1) aus einem positiven elektrodenaktiven Material, die auf beiden Seiten positiver Stromsammler (3) gebildet sind, und einer Vielzahl negativer Elektroden mit Schichten (2) aus einem negativen elektrodenaktiven Material, die auf beiden Seiten negativer Stromsammler (4) gebildet sind, durch Separatoren (5) in einer solchen Weise erhalten wird, dass die Schichten (1) aus positivem elektrodenaktiven Material den Schichten (2) aus negativem elektrodenaktiven Material zugewandt sind, wobei das Batterieelement mit flüssigem Elektrolyt imprägniert ist und durch ein Laminatgehäuse (23; 31, 32) gehalten wird,
   wobei die Lithium-Ionen-Sekundärbatterie die folgende Konfiguration aufweist, die **dadurch gekennzeichnet ist, dass**:

   (1) das positive elektrodenaktive Material eine durchschnittliche Teilchengröße von 3 bis 10 $\mu$m aufweist und die Gesamtstärke der auf beiden Seiten des positiven Stromsammlers (3) gebildeten Schichten (1) aus positivem elektrodenaktiven Material 30 bis 110 $\mu$m beträgt,
   (2) das negative elektrodenaktive Material eine durchschnittliche Teilchengröße von 5 bis 10 $\mu$m aufweist und die Gesamtstärke der auf beiden Seiten des negativen Stromsammlers (4) gebildeten Schichten (2) aus negativem elektrodenaktiven Material 30 bis 100 $\mu$m beträgt, und
   (3) Anschlüsse (6, 7) der positiven Elektrode und der negativen Elektrode zum äußeren Randteil geführt werden, wobei die Anschlüsse (6, 7) voneinander getrennt sind und der positive Elektrodenanschluss (6) bzw. der negative Elektrodenanschluss (7) die Formel:

$$B/A \geq 0{,}57$$

   erfüllen,

   wobei A eine Breite eines Bereichs des aktiven Materialbereichs (11) senkrecht zur Stromrichtung und B eine Breite des Elektrodenanschlusses senkrecht zur Stromrichtung ist.

2. Lithiumionen-Sekundärbatterie nach Anspruch 1, **dadurch gekennzeichnet, dass** der positive Elektrodenanschluss (6) und der negative Elektrodenanschluss (7) einander gegenüberliegend herausgeführt sind.

**3.** Lithiumionen-Sekundärbatterie nach Anspruch 1 oder 2, **dadurch gekennzeichnet, dass** Teile des positiven Elektrodenanschlusses (6) und des negativen Elektrodenanschlusses (7), die von dem Laminatgehäuse (23; 31, 32) freiliegen, Oberflächenbereiche aufweisen, die breiter als die Oberflächenbereiche des positiven Elektrodenanschlusses (6) und des negativen Elektrodenanschlusses (7) in dem Laminatgehäuse (23; 31, 32) sind.

**4.** Batteriepack, umfassend eine Kombination mehrerer Lithiumionen-Sekundärbatterien nach einem der Ansprüche 1 bis 3 durch den positiven Elektrodenanschluss (6) oder den negativen Elektrodenanschluss (7).

**5.** Batteriepack nach Anspruch 4, wobei der Batteriepack eine Struktur aufweist, bei der Kühlluft auf freiliegende Teile des positiven Elektrodenanschlusses (6) und des negativen Elektrodenanschlusses (7) geblasen wird.


**Revendications**

**1.** Accumulateur au lithium-ion comprenant

un élément d'accumulateur obtenu en empilant en alternance une pluralité d'électrodes positives comprenant des couches (1) d'un matériau actif d'électrode positive formées sur les côtés opposés des collecteurs de courant positif (3) et une pluralité d'électrodes négatives comprenant des couches (2) d'un matériau actif d'électrode négative formées sur les côtés opposés des collecteurs de courant négatif (4) à travers des séparateurs (5) de telle manière que les couches (1) de matériau actif d'électrode positive soient en face des couches (2) de matériau actif d'électrode négative, l'élément d'accumulateur étant imprégné par un électrolyte liquide et contenu dans un boîtier stratifié (23 ; 31, 32),
l'accumulateur au lithium-ion ayant la configuration suivante, **caractérisé en ce que** :

(1) le matériau actif d'électrode positive a une granulométrie moyenne de 3 à 10 $\mu$m et une épaisseur totale des couches (1) de matériau actif d'électrode positive formées sur les côtés opposés du collecteur de courant positif (3) est de 30 à 110 $\mu$m,
(2) le matériau actif d'électrode négative a une granulométrie moyenne de 5 à 10 $\mu$m et une épaisseur totale des couches (2) de matériau actif d'électrode négative formées sur les côtés opposés du collecteur de courant négatif (4) est de 30 à 100 $\mu$m, et
(3) des bornes (6, 7) de l'électrode positive et de l'électrode négative sont dirigées vers le bord externe avec les bornes (6,7) séparées l'une de l'autre, et la borne (6) de l'électrode positive et la borne (7) de l'électrode négative satisfont chacun la formule :

$$B/A \geq 0,57$$

où A est une largeur d'une région de la zone (11) de matériau actif dans la direction perpendiculaire à celle du courant et B est une largeur de la borne d'électrode dans la direction perpendiculaire à celle du courant.

**2.** Accumulateur au lithium-ion selon la revendication 1, **caractérisé en ce que** la borne (6) de l'électrode positive et la borne (7) de l'électrode négative sont disposées de manière à être en face l'une de l'autre.

**3.** Accumulateur au lithium-ion selon la revendication 1 ou 2, **caractérisé en ce que** des parties de la borne (6) de l'électrode positive et de la borne (7) de l'électrode négative exposées depuis le boîtier stratifié (23 ; 31, 32) ont des zones de surface plus larges que celles de la borne (6) de l'électrode positive et de la borne (7) de l'électrode négative dans le boîtier stratifié (23 ; 31, 32).

**4.** Bloc d'accumulateur comprenant une combinaison d'une pluralité d'accumulateurs au lithium-ion selon l'une quelconque des revendications 1 à 3 à travers la borne (6) de l'électrode positive ou la borne (7) de l'électrode négative.

**5.** Bloc d'accumulateur selon la revendication 4, dans lequel le bloc d'accumulateur a une structure avec soufflage d'air de refroidissement sur les parties exposées de la borne (6) de l'électrode positive et de la borne (7) de l'électrode négative.

Fig. 1

EP 1 655 797 B1

14

3 Positive current collector
(Current collecting part)

5 Separator

4 Negative current collector
(Current collecting part)

6 Positive electrode
lead terminal

8 Heat-sealing
part

7 Negative electrode
lead terminal

1 Positive electrode
active material layer

2 Negative electrode
active material layer

Fig. 2

11 Active material region

12 Current collecting part

B

A

C

13 Lead terminal

Fig. 3

The relation between the terminal width and current passing distance

B/A=57%

● : C/A=2
■ : C/A=1
◆ : C/A=0.5

Current passing distance (%)

The ratio of B to A (%)

Fig. 4

11 Active material region

12 Current collecting part

13 Lead terminal

Fig. 5

11 Active material region

12 Current collecting part

13 Lead terminal

Fig. 6

23 Laminate case

21 Lead terminal

Exposed part

211 Heat-sealing part

22 Electrode

Fig. 7

211 Heat-sealing part   23 Laminate case

21 Lead terminal

22 Electrode

Exposed part

Fig. 8

32 Laminate film (Covering material)

331 Current collecting part

341 Heat-sealing part

34

Lead terminal 34

Group of Electrodes 33

31 Laminate film (Cup-shaped case material)

Fig. 9

**EP 1 655 797 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000030745 A
- US 6365300 B1
- JP 11329409 A
- JP 2002151055 A
- JP 11185821 A
- JP 2003007287 A
- JP 11297354 A
- JP 11144771 A
- JP 2000277087 A
- WO 9960652 A
- US 4292381 A
- JP 9259859 A
- JP 2003017014 A
- US 2003112621 A
- US 6291102 B1
- EP 1333520 A2
- JP 2002026147 A